# FASCICULE DE BREVET EUROPEEN

(11) **EP 0 882 609 B1**
(45) Date de publication et mention de la délivrance du brevet: **20.11.2002**
(21) Numéro de dépôt: 98460021.3
(22) Date de dépôt: 05.06.1998
(51) Int. Cl.: B60J 1/20

(54) **Portière de véhicule à store intégré, et store correspondant**
Fahrzeugtür mit integriertem Rollo und korrespondierendes Rollo
Vehicle door wiht integrated roller blind and corresponding roller blind

(30) Priorité: 05.06.1997 FR 9706981; 17.02.1998 FR 9802151
(43) Date de publication de la demande: 09.12.1998
(73) Titulaire: Wagon Automotive, 79300 Bressuire (FR)
(72) Inventeur: Jincheleau, Michel, 79320 Moncoutant (FR)
(74) Mandataire: Vidon, Patrice

(56) Documents cités:
- EP-A- 0 027 864
- DE-A- 3 822 378
- DE-C- 3 617 427
- DE-C- 3 905 503
- DE-C- 4 335 309
- DE-C- 4 336 761
- US-A- 5 605 370
- PATENT ABSTRACTS OF JAPAN vol. 007, no. 173 (M-232), 30 juillet 1983 & JP 58 076321 A (MITSUBISHI JUKOGYO KK), 9 mai 1983
- PATENT ABSTRACTS OF JAPAN vol. 095, no. 002, 31 mars 1995 & JP 06 328943 A (TOYOTA AUTOM LOOM WORKS LTD), 29 novembre 1994

## Description

Le domaine de l'invention est celui des stores d'occultation pour portière de véhicule. Plus précisément, l'invention concerne les stores réctractables, selon le préambule de la revendication n°10, destinés à équiper une portière munie d'une vitre coulissante selon le préambule de la revendication n°10.

Classiquement, de telles portières de véhicule présentent un panneau de porte, sur lequel est monté une vitre coulissante, comme le montre par exemple le document DE 3617427C. Le panneau de porte comprend généralement une partie tôlée sur sa face extérieure correspondant à la carrosserie du véhicule, et une garniture de porte sur sa face intérieure. L'intérieur du panneau peut comprendre différents éléments, généralement en tôle, de renfort et d'accrochage des différents éléments. Il comprend également le système, mécanique ou électrique, de commande du coulissement de la vitre.

Cette vitre, qui ferme la baie aménagée dans la portière, peut pénétrer à l'intérieur du panneau au travers d'une fente prévue à cet effet. En général, cette fente est délimitée par deux joints lécheurs extérieur et intérieur, destinés à assurer l'étanchéité et le nettoyage de la vitre.

On connait depuis longtemps des stores rétractables permettant l'occultation partielle ou pratiquement totale de la baie de telles portières. Souvent, le store est monté sur un rouleau d'enroulement, logé à l'intérieur d'un boîtier que l'on vient fixer, d'une manière quelconque, sur la partie supérieure de la garniture intérieure de la portière.

Cette technique présente plusieurs inconvénients. Tout d'abord, le boîtier présente un encombrement relativement important qui diminue le champ de vision offert par la baie. Par ailleurs, du fait de cet encombrement, le store ne peut pas être convenablement plaqué contre la vitre, ce qui peut introduire des imperfections de l'occultation assurée par le store, et une gêne pour le conducteur ou le passager, tant sur le plan visuel que sur le plan sonore.

Un autre inconvénient de ces stores est qu'ils sont peu esthétiques (couleurs et matériaux différents de ceux de la garniture, fixations apparentes, présence d'un jour entre le dessous du boîtier et le dessus de la garniture de porte, ...). Enfin, la fixation de ces stores est généralement peu aisée, et nécessite parfois l'intervention d'un spécialiste.

Afin de pallier certains de ces inconvénients, il a été proposé de recouvrir de tels stores d'un élement de garniture rapporté sur la garniture intérieure existante de la portière. Cette technique est clairement préférable sur le plan de l'esthétique. En revanche, elle n'apporte pas de réponse aux autres inconvénients. Au contraire, elle rend plus complexe encore le montage.

Une autre technique connue est de monter le store à l'intérieur du panneau de porte. Selon cette technique, une ouverture spécifique doit être prévue sur la partie supérieure du panneau de porte, pour permettre le passage du rideau, ce qui nécessite une construction spécifique du panneau de porte.

Dans ce cas notamment, mais également selon la plupart des techniques connues, le rideau, lorsqu'il est déployé, n'est pas parfaitement plaqué contre la vitre, en particulier au voisinage de la partie inférieure. Cela peut occasionner des claquements ou des sifflements intempestifs, dus à la circulation de l'air entre le rideau et la vitre (ou l'ouverture correspondante), et une occultation qui peut être insuffisante.

L'invention a notamment pour objectif de pallier ces différents inconvénients de l'état de l'art.

Plus précisément, un objectif de l'invention est de fournir une portière de porte, et plus généralement tout type de panneaux de véhicule présentant une baie équipée d'une vitre coulissante rétractable à l'intérieur du panneau, qui puisse être occultée par un store sans qu'il soit nécessaire de rapporter un boîtier de store correspondant sur la garniture de cette portière.

En d'autres termes, un objectif de l'invention est de fournir une telle portière, dont ni l'esthétique, ni la visibilité, ne sont altérées par la présence d'un boîtier de store.

Un autre objectif de l'invention est de fournir une telle portière dont le store d'occultation se trouve plaqué contre la vitre, de façon plus efficace qu'avec les techniques antérieures.

L'invention a également pour objectif de fournir une telle portière, dans laquelle la mise en place et la fixation du store est simple et rapide.

Dans un mode de réalisation particulier de l'invention, un autre objectif de l'invention est de fournir une telle portière, dans laquelle les fonctions habituelles des joints-lécheurs ne sont pas altérés.

L'invention a également, bien-sûr, pour objectif de fournir un store en tant que tel, destiné à équiper une telle portière.

Ces objectifs, ainsi que d'autres qui apparaîtront plus clairement par la suite, sont atteints selon l'invention à l'aide d'une portière de véhicule, du type présentant un panneau de portière et une baie, ladite baie étant fermée par une vitre coulissante rétractable au moins partiellement à l'intérieur dudit panneau, au travers d'une fente prévue à cet effet dans ledit panneau, ladite portière comprenant un store comprenant un rideau rétractable permettant une occultation au moins partielle de ladite baie, ledit rideau d'occultation circulant dans ladite fente du panneau, le long de la face intérieure de ladite vitre.

Ainsi, il ne se pose plus aucun problème d'encombrement ni d'esthétique. Par ailleurs, le rideau d'occultation peut se trouver plaqué contre la vitre (par l'élément d'extrémité du panneau de porte et/ou un élément lécheur définissant la fente).

De façon avantageuse, ledit store est un store à enrouleur, comprenant un rideau souple enroulable sur un rouleau d'enroulement, et monté à l'intérieur dudit panneau.

Dans ce cas, le rouleau d'enroulement dudit store à enrouleur peut être monté sur un premier élément lécheur intérieur ou sur les moyens de support d'un premier élément lécheur intérieur, de façon que ledit premier élément lécheur intérieur plaque ledit rideau d'occultation le long de ladite vitre.
La mise en place est alors simplifiée, et le joint lécheur peut assurer la fonction de placage du rideau contre la vitre.
Ledit store à enrouleur porte préférentiellement au moins un second élément lécheur, venant s'appliquer contre la face intérieure de ladite vitre. Cette technique permet de remplacer le joint lécheur intérieur classique, dont le rôle est supprimé du fait de la présence du rideau d'occultation.

Avantageusement, ledit store à enrouleur est monté dans un boîtier portant ledit élément lécheur et comprenant des moyens de fixation à un élément interne dudit panneau.

Selon un mode de réalisation préférentiel, lesdits moyens de fixation au moins une partie dudit premier élément lécheur intérieur et/ou au moins une partie dudit second élément lécheur sont formés dans une même pièce.. Un matériau adapté peut être placé sur l'élément lécheur.

La fabrication et la mise en place du store sont alors particulièrement simples et peu coûteuses.

Lesdits moyens de fixation peuvent par exemple comprendre au moins une agrafe venant chevaucher une extrémité dudit élément interne du panneau.

Dans les cas où l'encombrement du boîtier n'est pas adapté à la structure d'une portière classique, ledit élément interne du panneau pourra être adapté de façon à ménager un espace suffisant pour recevoir ledit boîtier.

Dans un autre mode de réalisation, le store est un store à rideau rigide monté coulissant sur le châssis de la portière, pour coulisser selon une surface adjacente à celle de la vitre. Le rideau rigide, lorsqu'il est rétracté, est entièrement logé dans le châssis de la portière, ce qui réduit l'encombrement et améliore le confort d'utilisation, tout en évitant tout aménagement extérieur.

Avantageusement alors, la vitre ayant au moins un bord latéral engagé dans une glissière associée au châssis de la portière, le rideau rigide du store possède au moins un bord latéral qui est engagé dans un chemin de guidage délimité par un élément rapporté sur la glissière de coulissement de la vitre. Cette seule adaptation, interne au châssis de la portière, permet un montage rapide et aisé du store dont l'installation est ainsi particulièrement peu coûteuse.

L'invention concerne également un store en tant que tel, prévu pour être monté à l'intérieur d'un panneau de portière, et comprenant un rideau rétractable permettant une occultation au moins partielle de ladite baie, ledit rideau d'occultation circulant dans ladite fente du panneau, le long de la face intérieure de ladite vitre.

Préférentiellement, ledit store porte au moins un élément lécheur, venant s'appliquer contre la face intérieure de ladite vitre.

D'autres caractéristiques et avantages de l'invention apparaîtront plus clairement à la lecture de la description suivante d'un mode de réalisation préférentiel de l'invention, donné à titre de simple exemple illustratif et non limitatif, et des figures annexées, parmi lesquelles :
- la figure 1 est une vue partielle en coupe d'une portière à store intégré conforme à un premier mode de réalisation de l'invention ;
- la figure 2, présentant une vue partielle en coupe d'un autre mode de réalisation d'une portière à store intégré équipé d'un élément lécheur intégré ;
- la figure 3 est une vue analogue à la figure 1, illustrant un second mode de réalisation de l'invention ;
- la figure 4 est une vue partielle en coupe selon la ligne III-III de la figure 3, illustrant le montage coulissant du rideau rigide sur le châssis de la portière.

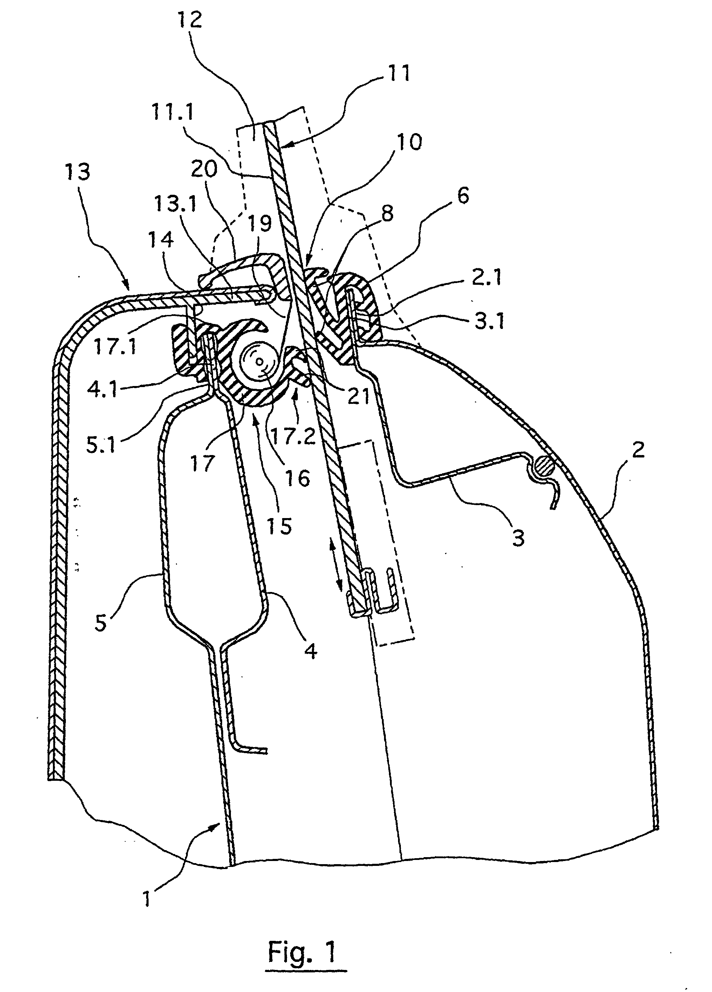

La portière illustrée sur la figure 1 comprend classiquement un panneau formé notamment d'un élément de carrosserie extérieur 2 et des éléments de structure intérieurs 3, 4, 5.

L'élément de structure 3 et l'élément de carrosserie 2 possèdent des parties supérieures planes 3.1, 2.1 qui forment des feuillures plaquées l'une contre l'autre selon un plan sensiblement vertical. De même, les éléments de structure 4 et 5 possèdent des parties supérieures planes 4.1 et 5.1 en forme de feuillures acollées l'une à l'autre selon un plan parallèle à celui des parties 2.1 et 3.1 à distance de celles-ci.

Un joint lécheur extérieur 6 est monté sur la partie plane 2.1. n présente des lèvres 8, qui délimitent, du côté extérieur, une fente supérieure 10 d'accès au volume intérieur du panneau 1 de la portière.

Une vitre coulissante 11 rétractable est montée coulissante sur le panneau 1 de la portière. Cette vitre peut coulisser au travers de la fente supérieur 10 entre une position rétractée, à l'intérieur du panneau 1, dans laquelle elle dégage la baie 12 à laquelle elle est associée, et une position déployée dans laquelle elle obture cette baie.

Conformément à l'invention, la portière est équipée d'un store rétractable 15. Il s'agit d'un store à enrouleur présentant un rouleau d'enroulement 16 monté tournant sur un bâti fixe 17, formant boîtier, fixé à l'intérieur du panneau 1.

Un rideau d'occultation souple 19 est enroulé autour du rouleau d'enroulement 16. Il est par exemple réalisé sous la forme d'une simple toile. Ce rideau souple 19 possède un bord libre, parallèle à l'axe de roulement du rouleau 16, qui est équipé d'une barre de tirage et de l'accrochage 20. Le barre de tirage 20 est disposée à l'extérieur du panneau 1, et le rideau souple 19 traverse la fente supérieure 10, le long de la face intérieure 11.1 de la vitre 11.

Le rideau souple 19 peut ainsi être déployée à l'extérieur du panneau 1 en tirant sur la barre de tirage 20 et en accrochant celle-ci à un élément d'accrochage fixe, voisin du bord supérieur (non représenté) de la baie 12 à occulter.

En état déployé, le rideau 19 est très peu distant de la face intérieure 11.1 de la vitre 11, ce qui assure une bonne efficacité de l'occultation ainsi réalisée, et réduit l'espace entre le rideau et la vitre.

En position reployée, le rideau 19 est totalement logé à l'intérieur du panneau 1 de la portière. Seule la barre de tirage 20, dont la forme peut être discrète et esthétique, est visible de l'extérieur, étant en appui sur l'élément de garniture 13. De plus, la barre 20, de par son faible encombrement, n'occasionne aucune gêne à l'utilisateur qui peut par exemple s'accouder normalement sur le rebord horizontal formé par l'élément de garniture 13.

Selon l'invention, le boîtier 17 du store est fixé sur la feuillure 4.1. Le mode de fixation peut être quelconque. Avantageusement, il s'agit d'un simple système formant agrafe 17.1, qui peut s'étendre sur toute la longueur du boîtier 17. On peut également prévoir plusieurs agrafes réparties sur la longueur du boîtier.

Le boîtier 17 vient donc prendre position à l'emplacement habituel d'un joint lécheur intérieur, qui se trouve généralement en regard du joint lécheur extérieur 6. La seule adaptation éventuellement nécessaire, par rapport aux portières habituelles, consistera donc, dans certains cas, à éloigner la feuillure 4.1 de la vitre 11, de façon à ménager un espace suffisant pour loger le boîtier de store. Aucune autre adaptation n'est nécessaire.

Pour pallier la suppression du joint lécheur intérieur classique, on équipe le boîtier du store lui-même d'un joint lécheur 17.2, présentant deux lèvres 21, qui joue la même fonction.

L'élément de garniture 13 peut être solidarisé, au moyen d'une branche de fixation 14, au boîtier 17. Cet élément de garniture forme ainsi un ressort horizontal dont l'extrémité 13.1 est adjacente à la fente supérieure 10.

Avantageusement le boîtier 17 est réalisé de façon monobloc, par exemple par extrusion. Il peut être par exemple en aluminium, ou en matière plastique. Les lèvres 21 peuvent si nécessaire être équipées, par exemple par flocage, d'un matériau adéquat pour le nettoyage de la vitre 11.

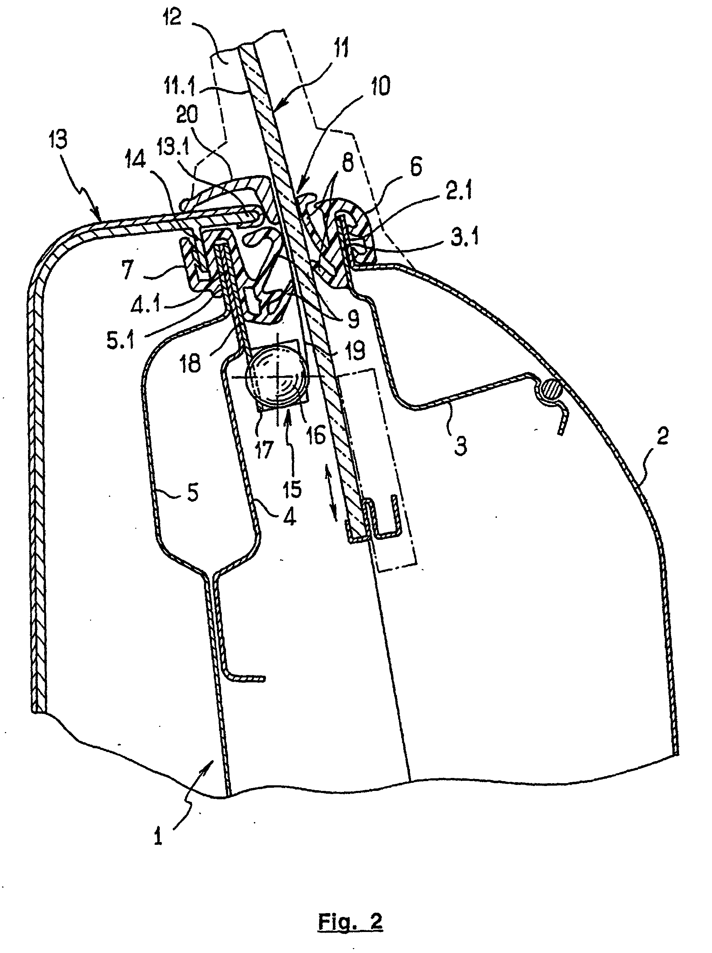

Dans un autre mode de réalisation illustré par la figure 2, le rouleau d'enroulement 16 est monté tournant sur bâti fixe 17 à l'intérieur du panneau 1, immédiatement en-dessous de la fente supérieure 10. La fixation du bâti fixe 17 est réalisée au moyen d'une plaquette ou feuillure de fixation 18 accolée plan sur plan à la feuillure 4.1 de l'élément de structure 4, entre cette feuillure et le joint lécheur intérieur 7 nécessite aucun aménagement intérieur particulier sur le châssis 1 de la portière et est, de ce fait, extrêment aisée et rapide.

En état déployé, le rideau 19 est très peu distant de la face intérieure 11.1 de la vitre 11, ce qui permet une bonne efficacité de l'occultation ainsi réalisée et évite toute perte d'espace entre le rideau et la vitre. En position reployée, le rideau 19 est totalement logé à l'intérieur du châssis 1 de la portière. Seule la barre de tirage 20, dont la forme peut être discrète et esthétique, est visible de l'extérieur, étant en appui sur l'élément de garniture 13. De plus, la barre 20, de par son faible encombrement, n'occasionne aucune gêne à l'utilisateur qui peut par exemple s'accouder normalement sur le rebord horizontal formé par l'élément de garniture 13.

Les modes de réalisation des figures 1 et 2 peuvent bien sûr être cumulées.

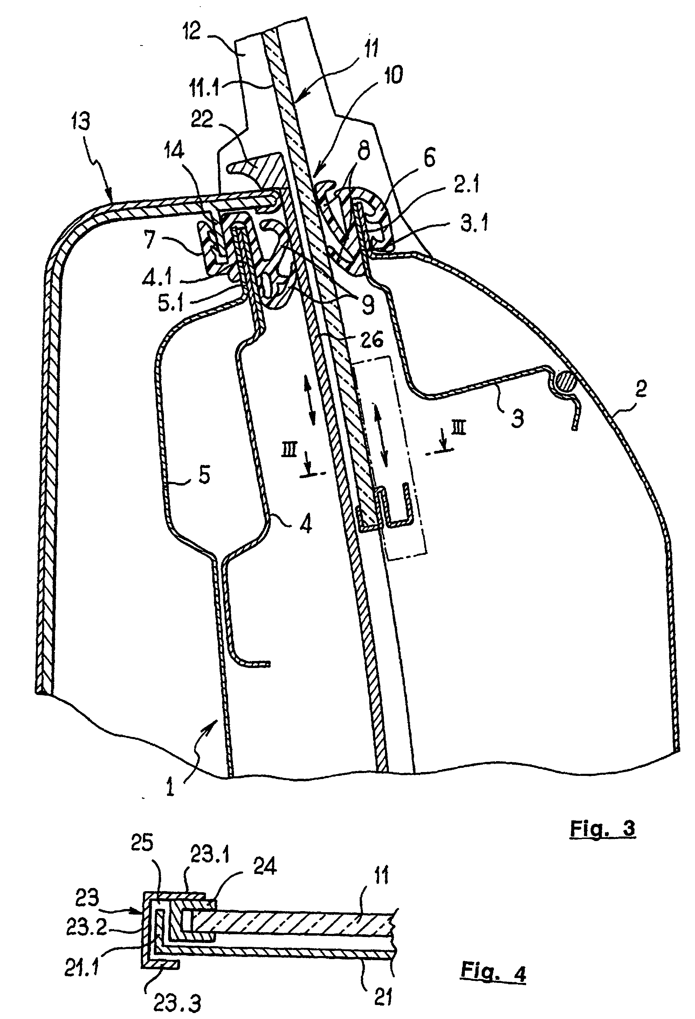

La figure 3 illustre un second mode de réalisation d'une portière à store intégré conforme à l'invention. La structure générale de la portière, avec son châssis 1, ses joints lécheurs 6 et 7, sa vitre 11 et sa garniture 13 est identique à celle précédemment décrite en référence à la figure 1. Les éléments identiques ont donc été désignés par les mêmes références numériques.

Ce second mode de réalisation se distingue du premier par la constitution de son store rétractable. Ce store est ici constitué d'un rideau rigide 26 qui est monté coulissant sur le châssis 1 de la portière, pour coulisser selon un plan (ou plus exactement une surface légèrement galbée) parallèle et adjacent à celui de la vitre 11. Ce rideau rigide 21 est équipé, à son bord supérieur libre, d'une barre de tirage et d'accrochage 22 qui, dans la position illustrée à la figure 2 correspondant à un état rétracté du store, est en appui contre le rebord horizontal de l'élément de garniture 13.

Comme précédemment, le rideau 21 traverse la fente supérieure 10 entre les lèvres du joint lécheur intérieur 7 et de la face intérieure 11.1 de la vitre 11.

Comme cela est schématiquement illustré par la figure 4 le montage coulissant du rideau 21 sur le châssis 1 est réalisé au moyen d'un profilé 23 à section en U, fixé sur une glissière 24 associée au châssis 1 et recevant l'un des deux bords latéraux de la vitre 11 pour en permettre le coulissement. Ce profilé 23 possède deux branches latérales 23.1 et 23.3 parallèles au plan de la vitre et du rideau 21 et une branche centrale 23.2 perpendiculaire à ce plan. Les chemins de guidage 25 à section en L recevant une ailette d'angle 21.1 ménagée sur le bord latéral du rideau 21. Le rideau rigide 21 est ainsi convenablement maintenu dans son coulissement vertical, en étant immobilisé selon deux directions, l'une parallèle au plan du rideau et l'autre perpendiculaire à ce plan. Il n'est donc pas nécessaire (même si cela est possible en fonction du type de portière concernée) de prévoir un autre profilé de guidage pour l'autre bord latéral du rideau 21.

Bien que l'on ait décrit ci-dessus une portière de structure classique, il est clair que la technique de l'invention peut être mise en oeuvre dans de nombreux autres types de portières, ainsi que dans des panneaux fixes équipés d'une vitre coulissante.

Par ailleurs, le coulissement n'est pas obligatoirement vertical. L'invention peut également s'appliquer à des vitres coulissant horizontalement, voire selon un axe quelconque.

## Revendications

1. Portière de véhicule, du type présentant un panneau de portière (1) et une baie (12), ladite baie (12) étant fermée par une vitre (11) coulissante rétractable au moins partiellement à l'intérieur dudit panneau (1), au travers d'une fente (10) prévue à cet effet dans ledit panneau (1), ladite fente (10) étant équipée d'un premier élément lécheur intérieur (7); la portière portant aussi un store (15) comprenant un rideau rétractable (19) permettant une occultation au moins partielle de ladite baie (12), **caractérisé en ce que** ledit rideau d'occultation (19) circule dans ladite fente (10) du panneau, le long de la face intérieure (11.1) de ladite vitre (11), de façon à être plaqué le long de ladite vitre (11) par ledit premier élément lécheur intérieur (7),
et **en ce que** ledit store (15) porte au moins un second élément lécheur (17.2), venant s'appliquer contre la face intérieure (11.1) de ladite vitre (11).

2. Portière de véhicule selon la revendication 1, **caractérisée en ce que** ledit store (15) est un store à enrouleur, comprenant le rideau (19) souple et enroulable sur un rouleau d'enroulement (16), et monté à l'intérieur dudit panneau (1).

3. Portière de véhicule selon la revendication 2, **caractérisée en ce que** le rouleau d'enroulement (16) dudit store à enrouleur (15) est monté sur ledit premier élément lécheur intérieur (7) ou sur les moyens de support dudit premier élément lécheur intérieur (7).

4. Portière de véhicule selon l'une quelconque des revendications 1 à 3, **caractérisée en ce que** ledit store à enrouleur (15) est monté dans un boîtier (17) portant ledit second élément lécheur (17.2) et comprenant des moyens (17.1) de fixation à un élément interne (4) dudit panneau (1).

5. Portière de véhicule selon la revendication 4, **caractérisée en ce que** ledit boîtier (17), lesdits moyens (17.1) de fixation et au moins une partie dudit premier élément lécheur intérieur (7) et/ou au moins une partie dudit second élément lécheur (17.2) sont formés dans une même pièce.

6. Portière de véhicule selon l'une quelconque des revendications 4 et 5, **caractérisée en ce que** lesdits moyens (17.1) de fixation comprennent au moins une agrafe venant chevaucher une extrémité (4.1) dudit élément interne (4) du panneau.

7. Portière de véhicule selon l'une quelconque des revendications 4 à 6, **caractérisée en ce que** ledit élément interne (4) du panneau est adapté de façon à ménager un espace suffisant pour recevoir ledit boîtier (17).

8. Portière de véhicule selon la revendication 1, **caractérisée en ce que** ledit store est un store à rideau rigide (21) monté coulissant sur ledit panneau (1), pour coulisser selon une surface adjacente à celle de ladite vitre (11).

9. Portière de véhicule selon la revendication 8, **caractérisée en ce que**, la vitre ayant au moins un bord latéral engagé dans une glissière (24) associée audit panneau (1), ledit rideau rigide (21) possède au moins un bord latéral qui est engagé dans un chemin de guidage (25) délimité par un élément rapporté sur ladite glissière (24).

10. Store pour portière de véhicule du type présentant un panneau de portière (1) et une baie (12), ladite baie étant fermée par une vitre (11) coulissante rétractable au moins partiellement à l'intérieur dudit panneau (1), au travers d'une fente (10) prévue à cet effet dans ledit panneau (1), ladite fente (10) étant équipée d'un premier élément lécheur intérieur (7); le store étant destiné à être monté à l'intérieur dudit panneau (1) et comprenant un rideau (19) rétractable permettant une occultation au moins partielle de ladite baie (12), **caractérisé en ce que** ledit rideau d'occultation (19) circule dans ladite fente (10) du panneau, le long de la face intérieure (11.1) de ladite vitre,
et **en ce que** le store porte au moins un second élément lécheur (17.2), venant s'appliquer contre la face intérieure (11.1) de ladite vitre.

## Patentansprüche

1. Fahrzeugtür von der Art, die einen Türflügel (1) und eine Öffnung (12) aufweist, wobei die Öffnung (12) von einer verschiebbaren Glasscheibe (11) verschlossen wird, die zumindest teilweise in den Türflügel (1) versenkbar ist, durch einen zu diesem Zweck im Türflügel (1) eingebauten Schlitz (10), wobei der Schlitz (10) ein erstes inneres Streifelement (7) aufweist und wobei die Tür auch ein Rollo (15) trägt, das einen zurückziehbaren Vorhang (19) aufweist, der ein zumindest teilweises Verhängen der Öffnung (12) ermöglicht,
**dadurch gekennzeichnet, dass** der Verdeckungsvorhang (19), derart im Schlitz (10) des Türflügels entlang der inneren Seite (11.1) der Glasscheibe (11) läuft, dass er gegen diese Glasscheibe (11) durch das erste innere Streifelement (7) angelegt wird und,
dass das Rollo (15) mindestens ein zweites Streifelement (17.2) trägt, das gegen die Innenseite (11.1) der Glasscheibe (11) drückt.

2. Fahrzeugtür nach Anspruch 1, **dadurch gekennzeichnet, dass** das Rollo (15) ein Aufwickelrollo ist, das den biegsamen Vorhang (19) umfasst, welcher auf der Walze (16) aufgewickelt wird und innerhalb des Türflügels (1) eingebaut ist.

3. Fahrzeugtür nach Anspruch 2, **dadurch gekennzeichnet, dass** die Aufwickelwalze (16) des Aufwickelrollos (15) auf das erste innere Streifelement (7) oder auf die Trägerelemente dieses ersten inneren Streifelementes (7) montiert wird.

4. Fahrzeugtür nach einem der Ansprüche 1 bis 3, **dadurch gekennzeichnet, dass** das Wickelrollo (15) in einem Gehäuse (17) eingebaut ist, welches das zweite Streifelement (17.2) trägt und über Mittel (17.1) zum Befestigen an ein inneres Element (4) des Türflügels (1) verfügt.

5. Fahrzeugtür nach Anspruch 4, **dadurch gekennzeichnet, dass** das Gehäuse (17), die Befestigungsmittel (17.1) und mindestens einen Teil des ersten inneren Streifelementes (7) und/oder mindestens ein Teil des zweiten Streifelementes (17.2) aus einem einzigen Teil gebildet werden.

6. Fahrzeugtür nach einem der Ansprüche 4 oder 5, **dadurch gekennzeichnet, dass** die Befestigungsmittel (17.1) mindestens eine Klammer umfassen, die auf einem Ende (4.1) des ersten inneren Elementes (4) des Türflügels aufliegt.

7. Fahrzeugtür nach einem der Ansprüche 4 bis 6, **dadurch gekennzeichnet, dass** das innere Element (4) des Türflügels so ausgebildet ist, dass ein ausreichend großer Raum zum Aufnehmen des Gehäuses (17) entsteht.

8. Fahrzeugtür nach Anspruch 1, **dadurch gekennzeichnet, dass** das Rollo einen starren Vorhang (21) aufweist, der derart verschiebbar auf dem Türflügel (1) montiert ist, dass er in einer Fläche läuft, die neben der Ebene der Glasscheibe (11) liegt.

9. Fahrzeugtür nach Anspruch 8, **dadurch gekennzeichnet, dass**, angesichts der Tatsache, dass die Glasscheibe mindestens einen Seitenrand aufweist, der in einer am Türflügel (1) angebrachten Gleitschiene (24) läuft, der starre Vorhang (21) mindestens einen Seitenrand aufweist, der in einer Führungsschiene (25) eingesetzt ist, die durch ein an der Gleitschiene (24) angebrachtes Element abgegrenzt ist.

10. Rollo für Fahrzeugtür, die einen Türflügel (1) und eine Öffnung (12) aufweist, wobei die Öffnung von einer verschiebbaren Glasscheibe (11) verschlossen wird, die zumindest teilweise in den Türflügel (1) versenkbar ist, durch einen zu diesem Zweck im Türflügel (1) eingebauten Schlitz (10), wobei der Schlitz (10) ein erstes inneres Streifelement (7) aufweist und wobei das Rollo innerhalb des Türflügels eingebaut wird und einen zurückziehbaren Vorhang (19) aufweist, der zumindest eine teilweise Abdeckung der Öffnung (12) zulässt, **dadurch gekennzeichnet, dass** der Verdeckungsvorhang (19) im Schlitz (10) des Türflügels entlang der inneren Seite (11.1) der Glasscheibe läuft und,
dass das Rollo mindestens ein zweites Streifelement (17.2) trägt, das an die Innenseite (11.1) der Glasscheibe anliegt.

## Claims

1. Vehicle door, of the type which has a door panel (1) and a window opening (12), the said window opening (12) being closed by sliding glass (11) which is at least partially retractable inside the said panel (1), through a slot (10) provided for this purpose in the said panel (1), the said slot (10) being equipped with a first inner cling element (7); the door also supporting a blind (15) comprising a retractable curtain (19) which permits at least partial screening of the said window opening (12), **characterised in that** the said screening curtain (19) circulates in the said slot (10) of the panel, along the inner surface (11.1) of the said glass (11), such as to be placed along the said glass (11) by the said first inner cling element (7),
and **in that** the said blind (15) supports at least one second cling element (17.2) which is applied against the inner surface (11.1) of the said glass (11).

2. Vehicle door according to claim 1, **characterised in that** the said blind (15) is a roller blind which comprises the flexible curtain (19) and can be wound on a winding roller (16), and fitted inside the said panel (1).

3. Vehicle door according to claim 2, **characterised in that** the winding roller (16) of the said roller blind (15) is fitted on the said first inner cling element (7) or on the means for support of the said first inner cling element (7).

4. Vehicle door according to any one of claims 1 to 3, **characterised in that** the said roller blind (15) is fitted in a case (17) which supports the said second cling element (17.2) and comprises means (17.1) for securing to an inner element (4) of the said panel (1).

5. Vehicle door according to claim 4, **characterised in that** the said case (17), the said means (17.1) for securing and at least part of the said first inner cling element (7) and/or at least part of the said second cling element (17.2) are formed in a single piece.

6. Vehicle door according to claim 4 or claim 5, **characterised in that** the said means (17.1) for securing comprise at least one clamp which straddles one end (4.1) of the said inner element (4) of the panel.

7. Vehicle door according to any one of claims 4 to 6, **characterised in that** the said inner element (4) of the panel is designed such as to provide a space sufficient to accommodate the said case (17).

8. Vehicle door according to claim 1, **characterised in that** the said blind is a rigid curtain blind (21) which is fitted such as to slide on the said panel (1), in order to slide according to a surface which is adjacent to that of the said glass (11).

9. Vehicle door according to claim 8, **characterised in that**, since the glass has at least one lateral edge which is engaged in a slide (24) associated with the said panel (1), the said rigid curtain (21) has at least one lateral edge which is engaged in a guiding track (25) delimited by an element added to the said slide (24).

10. Blind for a vehicle door of the type which has a door panel (1) and a window opening (12), the said window opening being closed by sliding glass (11) which is at least partially retractable inside the said panel (1), through a slot (10) provided for this purpose in the said panel (1), the said slot (10) being equipped with a first inner cling element (7); the blind being designed to be fitted inside the said panel (1) and comprising a retractable curtain (19) which permits at least partial screening of the said window opening (12), **characterised in that** the said screening curtain (19) circulates in the said slot (10) of the panel, along the inner surface (11.1) of the said glass (11), and **in that** the blind supports at least one second cling element (17.2) which is applied against the inner surface (11.1) of the said glass.
